# EUROPEAN PATENT APPLICATION

(11) **EP 4 606 224 A1**
(43) Date of publication of application: **27.08.2025**
(21) Application number: 23878930.9
(22) Date of filing: 26.09.2023
(51) Int. Cl.: A23L 13/10, A23L 13/60, A23L 7/161, A23L 7/191, A23P 30/32, A23P 30/34, A23L 33/00, A23L 13/50, A23L 17/10, A23L 7/17, A23L 11/00

(54) **MEAT-CONTAINING PUFFED FOODSTUFF AND PREPARATION METHOD THEREFOR**

(30) Priority: 19.10.2022 CN 202211281966
(71) Applicant: PepsiCo Foods (China) Company Limited, Shanghai 201600 (CN)
(72) Inventor: LI, Tianzhu, Shanghai 201600 (CN); YANG, Aimin, Shanghai 201600 (CN); ZHANG, Lingyu, Shanghai 201600 (CN); LV, Huanhuan, Shanghai 201600 (CN); LU, Xin, Shanghai 201600 (CN)
(74) Representative: McNamara, Kathryn
(86) International application number: PCT/CN2023/121537
(87) International publication number: WO 2024/082937

(57) **Abstract**

A meat-containing puffed foodstuff and a preparation method therefor. The preparation method includes: providing a puffed pellet including grain and meat; providing dried meat; mixing the dried meat with the puffed pellets to form a mixture; feeding the mixture into a chamber of a pressure-molding apparatus; exposing the mixture to an increased pressure and temperature inside the chamber for a selected period of time; and rapidly expanding the volume of the chamber to cause a rapid expansion of the contained mixture to obtain the puffed chip, that is, the meat-containing puffed food, in which the meat-containing puffed food has a total meat addition amount of 5 wt.% or more based on a total weight of the meat-containing puffed food. The meat-containing puffed food prepared by using the method has a high protein content and a complex taste, has a texture that is not sticky on the teeth, tastes crispy, is thin and crunchy, and is healthy and delicious.

## Description

### CROSS-REFERENCE TO RELATED APPLICATIONS

This application claims priority to Chinese patent application No. 2022112819668, filed on October 19, 2022, and titled "MEAT-CONTAINING PUFFED FOODSTUFF AND PREPARATION METHOD THEREFOR", the content of which is hereby incorporated by reference in its entirety.

### TECHNICAL FIELD

The present application relates to the technical field of food processing, in particular to a meat-containing puffed food and a preparation method thereof.

### BACKGROUND

Puffed foods are loose or crunchy foods made from grains, potatoes, beans, fruits, vegetables, or nut seeds as main raw materials through a puffing process. The puffing process refers to a process in which the raw materials expand in volume or become loose in structure after being heated or subjected to a pressure difference. Puffed food is becoming one of the most popular snack foods among consumers due to its convenience in carrying and eating, the crisp texture, the wide application of raw materials, varied flavors, etc. Common puffed foods include, for example, snow rice crackers, potato chips, shrimp crackers, shrimp chips, popcorn, rice crackers, etc.

At present, puffed foods can be roughly divided into fried and non-fried types according to the processing technologies. Frying puffing is a process in which the material is placed in oil at a relatively high temperature and heated until it is quickly cooked and expands in volume. Studies have shown that fried foods may cause obesity, damage the cardiovascular system, and induce diseases, and the long-term consumption may be harmful to health. Therefore, more and more food manufacturers are currently committed to using non-fried puffing technologies to prepare the puffed foods, and the direct extrusion puffing is a common non-fried puffing technology. Conventional directly extruded puffed foods are prepared by taking grains, potatoes, or beans as main raw materials, and directly extrusion puffing, during which the materials extrude forward by the driving force of the extruder screw, then are mixed, stirred, rubbed, and subjected to a high shear force to generate and accumulate energies to reach a high temperature and high pressure, and directly expand through a pressure difference inside and outside the machine. Although this process has the advantage of directly obtaining the cooked product, the obtained product is in a block or thick-sheet form due to usually using starch as the main raw material, thereby being difficult to produce a thin and crisp product.

With the development of the social economy, more and more attentions are paid to tastes, nutritional values, health, and safety of snack foods. More and more consumers expect snack foods to have both rich tastes and high health values.

### SUMMARY

In order to overcome the deficiencies of the existing conventional direct extrusion technology, the present application provides a meat-containing puffed food and a preparation method thereof, which can not only increase the meat content, enhance the nutritional value, but also provide a crisp texture and a complex taste.

In one aspect, the present application provides a method for preparing a meat-containing puffed food, including:
providing a puffed pellet including grain and meat;
providing dried meat;
mixing the dried meat and the puffed pellet to form a mixture;
feeding the mixture into a chamber of a pressure-molding apparatus;
exposing the mixture to an increased pressure and temperature inside the chamber for a selected period of time; and
rapidly expanding the volume of the chamber to cause a rapid expansion of the contained mixture to obtain a puffed chip, that is, the meat-containing puffed food,
wherein the meat-containing puffed food has a total meat addition amount of 5 wt.% or more based on a total weight of the meat-containing puffed food.

In another aspect, the present application provides a meat-containing puffed food prepared by the above method.

Other features and aspects of the present application will be described in detail below.

### BRIEF DESCRIPTION OF THE DRAWINGS

FIG. 1 shows a mixture of puffed pellets and dried meat prepared by a method according to an embodiment of the present application.
FIG. 2 is a photograph of a finished meat-containing puffed food prepared by a method according to an embodiment of the present application.

### DETAILED DESCRIPTION

The present application will now be described in detail below to make the person skilled in the art to easily practice the present application. However, it should be understood that the present application can be implemented in various forms and is not limited to the specific embodiments described herein, and the embodiments of the present application are only examples.

As used herein, the terms "about" or "approximately" as applied to numerical values encompass an exact value and a reasonable variance thereof.

Unless otherwise specified, the terms "include" and "comprise" and grammatical variations thereof are intended to represent an "open-ended" or "inclusive" language, such that the listed elements are included but that also permit the inclusion of additional and non-listed elements.

As used herein, the term "and/or" includes one or more or any combination of the listed items.

Unless otherwise specified, all percentages in this specification refer to percentages by weight. The expressions "% by weight", "weight %", and "% based on weight" are synonymous to "wt.%", which refer to an amount expressed as a percentage based on a dry weight.

Unless otherwise defined, all terms have and should be given the same meaning as commonly understood by those ordinary skilled in the art to which the present application belongs.

In an aspect, the present application provides a method for preparing a meat-containing puffed food. The method includes: providing a puffed pellet including grain and meat; providing dried meat; mixing the dried meat and the puffed pellet to form a mixture; feeding the mixture into a chamber of a pressure-molding apparatus; simultaneously or separately exposing the mixture to an increased pressure and temperature inside the chamber for a selected period of time; rapidly expanding the volume of the chamber to cause a rapid expansion of the contained mixture to obtain a puffed chip, that is, the meat-containing puffed food, wherein the meat-containing puffed food has a total meat addition amount of 5 wt.% or more based on a total weight of the meat-containing puffed food.

In the related art, food manufacturers prepare puffed foods by mixing meat with grain or starch raw materials and extruding and puffing them to increase the protein content. However, due to the limitations on the current common extrusion puffing process, the produced puffed foods have a low meat addition amount, a thick texture, and a single taste. If the meat addition amount is too high, the mixture of fresh meat and grain raw material that finally enters the puffing device will result in excessively water content and low temperature, which makes the production difficult or impossible, mainly reflected in sticking together, unable to be formed and insufficient degree of cooking for the final puffed pellets.

The present application innovatively mixes the puffed pellets and the dried meat and feeds the mixture into a pressure-molding apparatus for compressed popping, so that puffed chips with naked eye visible meat embedded into meat-containing substrates can be obtained. By introducing the dried meat, the meat content of the finished product can be increased without excessively increasing the meat content in the puffed pellet, which solves the problem that the puffed pellets stick together, are unable to be formed, and have insufficient degree of cooking caused by excessively adding the meat in the puffing device for the purpose of increasing the meat content of the finished product, thereby improving the production efficiency and the quality of the puffed pellets. In addition, compared to the puffed foods with single compositions in the related art, the puffed food containing naked eye visible meat embedded into the meat-containing substrate prepared by the method of the present application has a complex taste and a strong meaty flavor.

Besides, the meat-containing puffed food of the present application are mainly made from grains and meat. Grains contain high-quality plant proteins, which play an important role in preventing metabolic diseases such as obesity, diabetes and hyperlipidemia, and cardiovascular diseases and maintaining intestinal health. Meat is rich in animal proteins, contains various amino acids required by the human body, and has a high nutritional value. A crisp and thin texture containing rich plant proteins and animal proteins can be obtained by the compressed popping in the present application, with a high nutritional value.

In order to improve the formability of the puffed pellets and endow the prepared puffed chips with a relatively crisp texture, the water contents of the puffed pellet and the dried meat can be adjusted. In some embodiments of the present application, the water content of the puffed pellet can be 8 wt.% to 20 wt.%. In some embodiments, the water content of the puffed pellet can be 10 wt.% to 18 wt.%. In some embodiments, the water content of the puffed pellet can be 12 wt.% to 16 wt.%. In some embodiments, the water content of the puffed pellet can be 8 wt.%. In some embodiments of the present application, the water content of the dried meat can be 10 wt.% or less. In some embodiments, the water content of the dried meat can be 8 wt.% or less. In some embodiments, the water content of the dried meat can be 6 wt.% or less. If the water content of the puffed pellet is excessively high, the puffed pellets may stick together and become difficult to be formed. If the water contents of the puffed pellet and the dried meat are excessively low, the dried meat will be difficult to completely adhere to the meat-containing substrate in the subsequent puffing process. The present applicant has found through researches that it is appropriate to control the water contents of the puffed pellet and the dried meat within the above ranges, which can ensure not only the formability of the puffed pellets, but also completely embedding the meat into the meat-containing substrate; meanwhile, the finished product does not stick to the teeth when eaten, and has a thin and crisp texture and a strong meaty flavor. In addition, in order to further adjust the water content of the puffed pellet, the puffed pellet can be dried, for example, at a temperature of about 60 °C to 120 °C for about 5 to 60 minutes.

As used in the present application, the "compressed popping" is a food processing technology that usually uses electric heating as a heat source, during which upper and lower molds are brought close to each other to compress the material placed in the chamber defined by the upper and lower molds and the generally stationary ring mold, and then the upper and lower molds are moved away from each other to rapidly expand the volume of the chamber, so that the contained material rapidly expands, thereby obtaining a puffed product. For example, the upper and lower molds can be driven to move toward each other by a hydraulic cylinder and are heated to compress and heat the material to be processed, and then the upper and lower molds can be moved away from each other. Since the material has been heated to a high temperature and the upper and lower molds move away from each other at an enough fast speed, the free water in the material will be rapidly vaporized under baking at a high temperature, thereby expanding the material. Compared to the extrusion puffing technology, the specific surface area of the material in contact with the air is larger through this compressed popping method, so that the vaporization of the material is more uniform and consistent, and a thinner and crisper sheeted product can be produced.

In some embodiments of the present application, exposing the mixture to an increased pressure and temperature inside a chamber for a selected period of time includes: exposing the mixture to an increased pressure inside the chamber for 0.1 to 3 seconds, and baking the mixture under a temperature of 200 °C to 300 °C for 0.1 to 3 seconds. In some embodiments, exposing the mixture to an increased pressure and temperature inside a chamber for a selected period of time includes: exposing the mixture to an increased pressure inside the chamber for 0.3 to 1.2 seconds, and baking the mixture under a temperature of 220 °C to 280 °C for 0.5 to 2.5 seconds. In some embodiments, exposing the mixture to an increased pressure and temperature inside a chamber for a selected period of time includes: exposing the mixture to an increased pressure inside the chamber for 0.5 to 2 seconds, and baking the mixture under a temperature of 220 °C to 250 °C for 1 to 2 seconds. The puffed chip obtained after expansion can be repeatedly compressed, baked and expanded as needed, for example, repeating about 1 to 3 times. In a specific embodiment, exposing the mixture to an increased pressure and temperature inside a chamber for a selected period of time includes: exposing the mixture to an increased pressure inside the chamber for 0.3 seconds, baking the mixture under a temperature of 230 °C for 2 seconds, and then subjecting the puffed chip obtained after expansion to steps of compressing, baking and expanding once. According to the above embodiment, by optimizing the process parameters of the compressed popping process, the water content of the obtained puffed chip can be about 3 wt.% to 10 wt.%, for example, about 4 wt.%, and the bulk density of the obtained puffed chip can be about 30 g/L to 80g/L, for example, about 60 g/L, thereby obtaining thin chips with a non-sticky and crisp texture. It is discovered by the present applicant that by appropriately controlling not only the water contents of the puffed pellet and the dried meat, but also the process conditions of the compressed popping process according to the method of the present application, the prepared meat-containing puffed food has a relatively crisp and thin texture.

It is further discovered by the present applicant that by adjusting the mixing ratio of dried meat and puffed pellet and using a pressure-molding apparatus for compressed popping, the dried meat can be entirely adhered to the puffed pellet, and a puffed chip with naked eye visible meat adhered to the meat-containing substrate can be obtained after sheet formation. Due to a certain amount of meat also contained in the meat-containing substrate, the obtained puffed chip has a high meat content, a strong meaty flavor, and a complex taste. By adjusting the mass ratio of dried meat and puffed pellet within a suitable range, the adhesion of the meat and the crisp texture of the puffed chip can further be ensured. In some embodiments, the mass ratio of dried meat to puffed pellet can be no greater than 1:5. In some embodiments, the mass ratio of dried meat to puffed pellet can be no greater than 1:8. In some specific embodiments, the mass ratio of dried meat to puffed pellet can be about 1: 10. Thus, it can ensure that the meat is completely, uniformly, and firmly embedded into the puffed chip, while the puffed chip has a crisp texture.

To further improve the adhesion of the meat, the sizes of the dried meat and the puffed pellet can be controlled to be about 10 mm or less, which can ensure that the puffed pellets are uniformly mixed with the dried meat to obtain crisp chips with meat uniformly embedded into the substrate and having a desired thickness, e.g., about 1 mm to 8 mm.

In some embodiments of the present application, the dried meat can be obtained by drying fresh meat or pre-prepared meat. In some embodiments of the present application, the pre-prepared meat can be prepared by pre-treating such as marinating, seasoning, or frying the fresh meat with at least one of edible starch, food additives, and seasonings to further improve the adhesion of the meat and improve the flavor of the dried meat. For example, a whole piece of fresh meat after washing can be put into a sauce prepared by edible starch, food additives, seasonings, etc., for a period of time, then cut into diced meat by a meat cutting device such as a meat grinder, and dried. Alternatively, the whole piece of fresh meat after washing can be cut into diced meat, then mixed with the sauce and marinated for a period of time, and dried. Thus, the dried meat with a strong flavor and a certain degree of maturity can be obtained, which is convenient for subsequent compressed popping to obtain the crisp chips with a complex taste and containing naked eye visible meat embedded into the meat-containing substrates.

In the present application, the meat can be dried by any method known in the art, as long as the water content of the meat can be controlled within a suitable range, e.g., about 10 wt.% or less. In some embodiments, the meat can be dried by baking or freezing. For example, after being seasoned or fried, the meat is dried by microwave, hot air, freezing, etc. By drying the meat to control its water content to, for example, about 10 wt.% or less, it is convenient for the meat to be firmly adhered to the puffed chip after subsequent compressed popping with the puffed pellet.

The puffing process in the present application may not involve frying, so that the obtained puffed food is healthy and safe. In some embodiments, the puffed pellet can be prepared by non-frying puffing methods, such as extrusion puffing, low-temperature vacuum puffing, microwave puffing, compressed popping, etc. In some embodiments, the puffed pellet can be prepared by extrusion puffing, and it is non-fried and healthier.

As used in the present application, "extrusion puffing" is a new processing technology that integrates mixing, stirring, crushing, heating, cooking, sterilization, puffing and molding, and can realize simultaneously and continuously operation of a series of units. When a material is fed into an extrusion puffing device, the material moves forward under the driving action of the screw and the spiral. Meanwhile, due to the mechanical friction between the spiral and the material, between the material and the barrel, and within the material, the material is strongly squeezed, stirred, and sheared to be further refined and homogenized. As the pressure inside the machine cavity gradually increases, the temperature continues to rise accordingly. Under the conditions of high temperature, high pressure, and high shear force, physical properties of the material change and the material changes from powder to paste, so that the starch is gelatinized and degraded, the protein is denatured and reorganized, and the fiber is partially degraded and refined. When the paste material is ejected from the die hole, under the action of a strong pressure difference, the water vaporizes rapidly, and the material is puffed to form a puffed product with a loose, porous, and crisp structure.

In the preparation method of the present application, the extrusion puffing device used can be any suitable device known in the art, such as a single screw extruder, a twin-screw extruder, or a multi-screw extruder. The screw extruder relies on the pressure and shear force generated by the rotation of the screw to fully plasticize and uniformly mix the material, and molding through the die surface. In some embodiments, for example, a twin-screw extruder can be used.

The present applicant has further found that by adjusting the meat addition amount and the water content of the puffed pellet as well as adjusting the process conditions of extrusion puffing accordingly, it can successfully prepare puffed pellets with a high meat content through the existing extrusion puffing device, thereby preparing the crisp chips with meat completely embedded into the meat-containing substrate by compressed popping. In some embodiments of the present application, the meat addition amount of the puffed pellet can be about 5 wt.% to 60 wt.%. In some embodiments, the meat addition amount of the puffed pellet can be about 20 wt.% to 30 wt.%. In some embodiments, the meat addition amount of the puffed pellet can be about 30 wt.% to 50 wt.%. In a specific embodiment, the meat addition amount of the puffed pellet can be about 38 wt.%. In some embodiments, the conditions for extrusion puffing can include, for example, a temperature of about 60 °C to 120 °C and a period of time of about 10 to 60 seconds. In some embodiments, the conditions for extrusion puffing can include, for example, a temperature of about 110 °C and a period of time of about 20 seconds. In some embodiments, the conditions for extrusion puffing can include, for example, a temperature of about 80 °C to 100 °C and a period of time of about 20 to 40 seconds. In some embodiments, the conditions for extrusion puffing can include, for example, a temperature of about 85 °C and a period of time of about 30 seconds. Thus, by controlling the heating temperature and the period of time of extrusion puffing, the puffed pellets with a crisp texture, a particle size of about 10 mm or less, and a moderate water content can be obtained.

According to the above embodiments, by appropriately adjusting the meat addition amount and water content of the puffed pellet and the process conditions of extrusion puffing, it can obtain the puffed chips with a high meat content and a crisp texture while ensuring the smooth operation of the extrusion puffing device, for example, preventing the puffed pellets from agglomerating, being unable to form, or being insufficiently cooked, etc.

In order to further improve the texture of the puffed chip, the obtained puffed chip can be further dried after compressed popping, and the dried puffed chip can have a water content of about 6 wt.% or less, such as 4 wt.%, so that the puffed chip is crisper.

In some embodiments of the present application, the obtained puffed chip can further be seasoned. For example, a seasoning slurry such as oil, seasonings, etc. is applied to the puffed chip to improve the flavor of the puffed food. Any coating method known in the art can be used, as long as the seasoning slurry can be uniformly applied to the puffed chip. In some embodiments of the present application, oil and seasoning can be mixed into a slurry, and the slurry can be sprayed onto the surface of the puffed chip and dried. Specifically, oil and seasoning are mixed into a seasoning slurry by using a slurry mixing device, and the seasoning slurry is sprayed onto the surface of the puffed chip undergone compressed popping by a sprayer. In some embodiments, oil can be sprayed onto the surface of the puffed chip, and then the seasoning is sprayed onto the surface of the puffed chip. Specifically, oil is first sprayed onto the surface of the puffed chip undergone compressed popping by using an oil spraying device, and then the seasoning is sprayed onto the surface of the puffed chip by using a seasoning device. Thus, the seasoning slurry can penetrate the puffed chip, thereby giving a strong flavor.

It can be understood that the amounts of oil and seasoning can be determined and adjusted according to actual needs, and the types of oil and seasoning can also be selected according to needs. For example, oil can be vegetable oil or animal oil. For example, vegetable oil can be selected from the group consisting of rapeseed oil, peanut oil, hemp seed oil, corn oil, olive oil, camellia oil, palm oil, sunflower seed oil, soybean oil, sesame oil, linseed oil, grape seed oil, walnut oil, peony seed oil, etc. According to the desired flavor, the seasoning for example can be one or more selected from the group consisting of salt, sugar, monosodium glutamate, vinegar, pepper powder, powder of Chinese prickly ash, dried ginger, chili powder, star anise, cloves, bay leaf, cinnamon, five-spice powder, thirteen spices, curry powder, Shichimi, soy sauce, cooking wine, edible essence, compound seasoning, etc. The seasoning can be appropriately selected as needed without special restrictions.

In the preparation method of the present application, any suitable method and device known in the art can be used to mix the raw materials during mixing. For example, in some embodiments, the mixture containing grain and meat can be directly fed into an extrusion puffing device for mixing. Alternatively, a mixer or a paddle-type dough mixer can be used for mixing. The mixing speed, mixing time, and mixing weight can be adjusted by those skilled in the art as needed.

In the case of a horizontal high-speed mixer, the mixed mixture can be directly fed to a feed port of the extrusion puffing device through a screw feeder; alternatively, the mixed mixture can be pretreated before being fed to the extrusion puffing device, for example, pretreated with a modulator. In some embodiments, the mixed mixture can be directly fed to the feed port of the extrusion puffing device through a screw feeder. In other embodiments, the mixed mixture can be pretreated with a modulator before being fed to the extrusion puffing device. For example, the mixture can be modulated with liquid water, steam water, or oil in a modulator, and then fed to the extrusion puffing device.

Water is injected into the modulator or the extrusion puffing device by means of devices known in the art, such as peristaltic pumps, injection plunger pumps, metering pumps, screw pumps, rotor pumps, etc. The water addition amount of the mixture can be adjusted as needed, as long as the mixture can be formed.

In order to facilitate molding and improve nutrition and flavor, in some embodiments, the puffed pellet can include but is not limited to at least one of protein powder, beans, edible starch, food additives, nutritional fortifiers, seasonings, etc.

The protein powder suitable for the present application can be vegetable protein powder, animal protein powder, or mixed protein powder. For example, the protein powder can be one or more selected from the group consisting of soy protein powder, collagen powder, corn protein powder, peanut protein powder, whey protein powder, egg protein powder, pea protein powder, brown rice protein powder, etc. The edible starch suitable for the present application can be one or more selected from the group consisting of corn starch, rice starch, potato starch, wheat starch, sweet potato starch, tapioca starch, mung bean starch, etc. The food additive suitable for the present application can be one or more selected from the group consisting of a flavor enhancer, a leavening agent, food coloring, preservative, sweetener, edible essence, etc. Edible essence can be one or more selected from the group consisting of chive flavor essence, citrus flavor essence, fruit flavor essence, mint flavor essence, bean flavor essence, spicy flavor essence, milk flavor essence, meat flavor essence, nut flavor essence, wine flavor essence, vegetable flavor essence, etc. The nutritional fortifier suitable for the present application can be one or more selected from the group consisting of astaxanthin, glutathione, fermented bran extract, vitamins, dairy products, trace elements, etc. The seasoning suitable for the present application is as defined above.

Other auxiliary materials can further be added to the mixture, such as one or more additives, including but being not limited to nitrogen source protein, amino acid, carbohydrate source, saturated or unsaturated fatty acid, plant extract, sterols, defoamer, pigment, and other additives. In some embodiments, the grain mixture can contain maltodextrin and beta-carotene. In some embodiments, the mixture can contain turmeric or other functional raw materials such as DHA powder, phytosterol esters, phosphatidylserine, mulberry leaf extract, etc.

As used herein, the term "beans" refers to seeds of the genus Glycine of the Leguminosae family. Beans suitable for the present application can include, but are not limited to, soybeans, broad beans, red beans, mung beans, soybeans, black beans, cowpeas, peas, sword beans, lentils, kidney beans, chickpeas, pigeon peas, etc. In some embodiments, beans can be at least one selected from the group consisting of soybeans, broad beans, red beans, mung beans, soybeans, and black beans. In some embodiments, beans can be, for example, soybeans. The form of beans is not particularly limited and may be adjusted as required, including but being not limited to powder, pellet, sheet, suspension, block, etc. In some embodiments, beans can be in the form of powder, pellet, sheet, or block, etc. In some embodiments, beans can be in a powder form.

As used herein, the term "grain" refers to a monocot or dicot plant grown for its edible seeds, including plants selected from the genus Oryza, the genus Triticum, or a combination thereof belonging to the Poaceae family. Grains suitable for the present application can be selected from the group consisting of, for example, rice, millet, corn, wheat, oats, barley, and sorghum. In some embodiments, the grain is at least one selected from the group consisting of rice, corn, and wheat. In some embodiments, the grain can be rice.

The form of the grain is not particularly limited and can be adjusted as needed, including but being not limited to powder, pellet, sheet, suspension, block, etc. In some embodiments, the grain can be in the form of powder, pellet, sheet, or block, etc. In some embodiments, the grain can be in a powder form.

As mentioned herein, "meat" can be at least one selected from the group consisting of chicken, pork, beef, mutton, duck, freshwater aquatic products, and seafood. The meat in the puffed pellet and the meat of the dried meat can be the same or different, and they can be appropriately selected as needed.

The "puffed chip" used herein is only for description easily and is not intended to limit to a sheet form. Those skilled in the art can understand that the meat-containing puffed food of the present application can also be in other shapes, such as a hollow strip, block, etc., as long as it has a crisp texture. In the case where the meat-containing puffed food of the present application is in a thin sheet, the preparation process of the puffed chip further includes a sheet forming step.

Generally, the prepared meat-containing puffed food can further be quantitatively packaged. According to needs, the puffed food can be packaged in bags, boxes, cans, etc., without special restrictions.

In another aspect, the present application provides a meat-containing puffed food prepared by the above method. The prepared meat-containing puffed food contains naked eye visible meat embedded into the meat-containing substrate, has a strong meaty flavor, a complex taste, a non-sticky texture, and is crisp and thin.

In some embodiments, the meat-containing puffed food is prepared by raw materials including: 30 wt.% to 98 wt.% of the puffed pellet, 1 wt.% to 30 wt.% of the dried meat, and 1 wt.% to 40 wt.% of seasoning slurry. In some embodiments, the meat-containing puffed food is prepared by raw materials including: 60 wt.% of the puffed pellet, 20 wt.% of the dried meat, 15 wt.% of vegetable oil, and 5 wt.% of seasoning. In some embodiments, the puffed pellet is prepared by raw materials including: about 5 wt.% to 60 wt.% of grains, about 5 wt.% to 60 wt.% of meat, about 0 wt.% to 20 wt.% of beans, about 0 wt.% to 25 wt.% of protein powders, and about 0 wt.% to 45 wt.% of edible starch. In some embodiments, the puffed pellet is prepared by raw materials including: about 20 wt.% of grains, 60 wt.% of meat, 5 wt.% of protein powder, 5 wt.% of beans, 8.5 wt.% of edible starch, and 1.5 wt.% of food additives.

According to the above embodiments, the meat-containing puffed food can have a water content of about 1 wt.% to 6 wt.%, with a non-sticky, crisp, and thin texture.

It can be understood that the meat-containing puffed food of the present application can be made into various flavors or forms to meet the needs of different consumers. In some embodiments of the present application, the meat-containing puffed food can be, for example, chicken breast crisp chips, beef crisp chips, pork crisp chips, mutton crisp chips, shrimp chips, fish chips, etc. In some embodiments, the meat-containing puffed food can be, for example, chicken breast crisp chips.

The meat-containing puffed food and the preparation method thereof of the present application will be described in detail below in conjunction with specific examples, but the present application is not limited thereto. Unless otherwise specified, the raw materials and chemicals in the following examples are all food grade and are from commercially available products.

### Example 1

The meat-containing puffed food in this example was prepared as follows:

About 20 wt.% of rice powders, about 60 wt.% of chicken pastes, about 5% of soybean powders, about 5 wt.% of protein powders, about 8.5 wt.% of edible starch, and about 1.5 wt.% of food additives were mixed uniformly with an appropriate amount of water. The mixture was fed into a twin-screw extruder, extruded, and puffed at a temperature of about 85 °C for about 30 seconds, and then dried at a temperature of about 100 °C for about 30 minutes to obtain chicken puffed pellets with a particle size of about 4 mm and a water content of about 10%.

Fresh chicken breast was taken, seasoned with an appropriate amount of added seasonings, and cut into diced chicken. The diced chicken was dried with hot air until the water content was about 10% or less to obtain dried diced chicken with a particle size of about 4 mm.

The dried diced chicken and the chicken puffed pellets obtained were mixed uniformly in a mass ratio of about 1:8. The mixture was fed into a pressure-molding apparatus through a feeder for compressed popping. The compressed popping was performed by action at an increased pressure for about 2 seconds and baking for about 1 second at a temperature of about 220 °C, which was then repeated twice. Sheets were formed and then dried at a temperature of about 130 °C to obtain puffed chips with a water content of about 4%, and then discharged.

The vegetable oil was sprayed onto the surfaces of the discharged puffed chips through an oil spraying device, then seasonings were sprayed onto the surfaces of the puffed chips through a seasoning applying device, followed by drying to obtain chicken breast crisp chips.

### Example 2

The meat-containing puffed food in this example was prepared as follows:

About 30 wt.% of rice powders, about 30 wt.% of chicken pastes, about 20% of soybean powders, about 3 wt.% of protein powders, about 15 wt.% of edible starch, and about 2 wt.% of food additives were mixed uniformly with an appropriate amount of water. The mixture was fed into a twin-screw extruder, extruded, and puffed at a temperature of about 110 °C for about 20 seconds, and then dried at a temperature of about 120 °C for about 10 minutes to obtain chicken puffed pellets with a particle size of about 6 mm and a water content of about 15%.

Fresh chicken breast was taken, seasoned with an appropriate amount of added seasonings, and cut into diced chicken. The diced chicken was dried with hot air until the water content was about 10% or less to obtain dried diced chicken with a particle size of about 7 mm.

The dried diced chicken and the chicken puffed pellets obtained were mixed uniformly in a mass ratio of about 1:8. The mixture was fed into a pressure-molding apparatus through a feeder for compressed popping. The compressed popping was performed by action at an increased pressure for about 3 seconds and baking for about 1 second at a temperature of about 200 °C, which was then repeated once. Sheets were formed and then dried at a temperature of about 105 °C to obtain puffed chips with a water content of about 5%, and then discharged.

The vegetable oil was sprayed onto the surfaces of the discharged puffed chips through an oil spraying device, then seasonings were sprayed onto the surfaces of the puffed chips through a seasoning applying device, followed by drying to obtain chicken breast crisp chips.

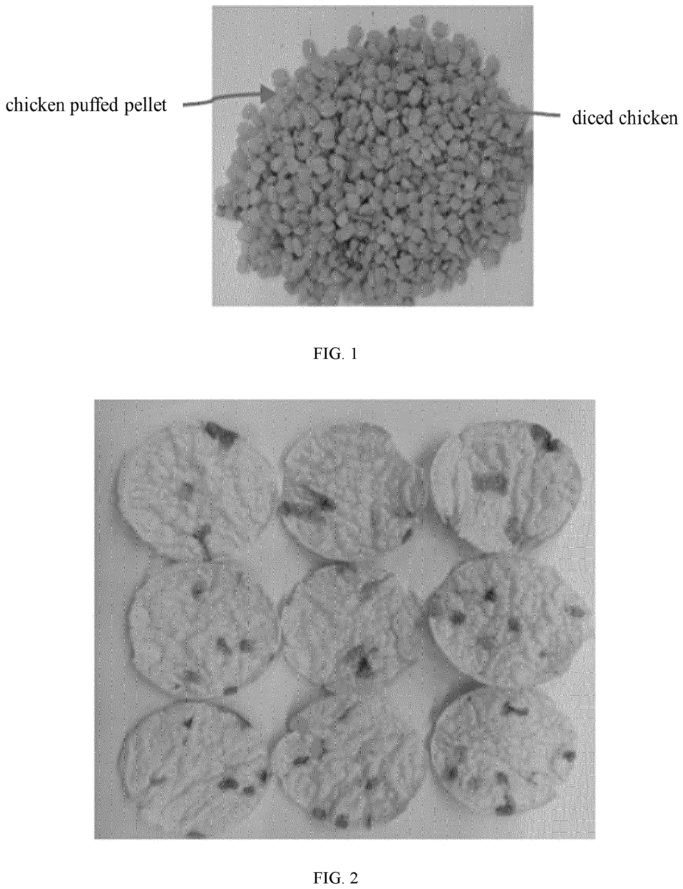

FIG. 1 shows a mixture of the chicken puffed pellets and the dried diced chicken prepared in these examples. FIG. 2 is a photograph of the chicken breast crisp chips prepared in these examples. The chicken breast crisp chips prepared in these examples have a good chip forming yield with an average yield of about 83% or more, a meat content of about 30% or more, and a water content of about 2%. The chicken is clearly visible to be embedded into the substrate. The chicken breast crisp chips have a rich meaty flavor, a complex taste, and a crisp and thin texture.

The term "yield" refers to a ratio of good crisp chips to total crisp chips, where the good crisp chips are those without scorch, black spots, non-puffing, crushing, deformation, etc.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the patent protection of the present disclosure shall be defined by the appended claims.

## Claims

1. A method for preparing meat-containing puffed food, comprising:
providing a puffed pellet comprising grain and meat;
providing dried meat;
mixing the dried meat and the puffed pellet to form a mixture;
feeding the mixture into a chamber of a pressure-molding apparatus;
exposing the mixture to an increased pressure and temperature inside the chamber for a selected period of time; and
rapidly expanding the volume of the chamber to cause a rapid expansion of the contained mixture to obtain the puffed chip, that is, the meat-containing puffed food,
wherein the meat-containing puffed food has a total meat addition amount of 5 wt.% or more based on a total weight of the meat-containing puffed food.

2. The method for preparing meat-containing puffed food of claim 1, wherein the puffed pellet has a meat addition amount of 5 wt.%~60 wt.%.

3. The method for preparing meat-containing puffed food of claim 1 or 2, wherein the puffed pellet has a water content of 8 wt.%~20 wt.%.

4. The method for preparing meat-containing puffed food of any one of claims 1 to 3, wherein the dried meat has a moisture content of 10 wt.% or less.

5. The method for preparing meat-containing puffed food of any one of claims 1 to 4, wherein a mass ratio of the dried meat and the puffed pellet is no greater than 1: 5.

6. The method for preparing meat-containing puffed food of claim 5, wherein the mass ratio of the dried meat and the puffed pellet is 1:10.

7. The method for preparing meat-containing puffed food of any one of claims 1 to 6, wherein exposing the mixture to an increased pressure and temperature inside a chamber for a selected period of time comprises: exposing the mixture to an increased pressure inside the chamber for 0.1~3 s, and baking the mixture under a temperature of 200 °C~300 °C for 0.1~3 s.

8. The method for preparing meat-containing puffed food of any one of claims 1 to 7, wherein exposing the mixture to an increased pressure and temperature inside a chamber for a selected period of time comprises: exposing the mixture to an increased pressure inside the chamber for 0.3~1.2 s, and baking the mixture under a temperature of 220 °C~280 °C for 0.5~2.5 s.

9. The method for preparing meat-containing puffed food of any one of claims 1 to 8, further comprising a step of seasoning the puffed chip.

10. The method for preparing puffed meat-containing food of claim 9, wherein the seasoning comprises applying oil and/or seasoning to the puffed chip.

11. The method for preparing meat-containing puffed food of claim 9, wherein the seasoning comprises: mixing and spraying oil and seasoning onto a surface of the puffed chip; or spraying oil onto a surface of the puffed chip, and then spraying seasoning onto the surface of the puffed chip.

12. The method for preparing meat-containing puffed food of any one of claims 1 to 11, wherein the puffed chip has a water content of 3 wt.%~10 wt.%, and a bulk density of 30 g/L~80g/L.

13. The method for preparing meat-containing puffed food of any one of claims 1 to 12, wherein the step of preparing the puffed chip further comprises drying the obtained puffed chip, and the dried puffed chip has a water content of 6 wt.% or less.

14. The method for preparing meat-containing puffed food of any one of claims 1 to 13, wherein the step of providing puffed pellet comprises extruding and puffing a mixture comprising grain and meat to obtain the puffed pellet.

15. The method for preparing meat-containing puffed food of claim 14, wherein the extrusion is performed under temperature of 60 °C~120 °C for 10~60 s.

16. The method for preparing meat-containing puffed food of any one of claims 1 to 15, wherein the step of providing dried meat comprises drying fresh meat or pre-prepared meat to obtain the dried meat, wherein the drying is bake-drying or freeze-drying.

17. The method for preparing meat-containing puffed food of claim 16, wherein the pre-prepared meat is prepared by pretreating fresh meat using at least one of edible starch, food additives, and seasonings.

18. The method for preparing meat-containing puffed food of any one of claims 1 to 17, wherein the puffed pellet has a size of 10 mm or less.

19. The method for preparing meat-containing puffed food of any one of claims 1 to 18, wherein the dried meat has a size of 10 mm or less.

20. The method for preparing meat-containing puffed food of any one of claims 1 to 19, wherein the puffed pellet further comprises at least one of protein powder, beans, edible starch, food additives, nutritional fortifiers, and seasonings.

21. The method for preparing meat-containing puffed food of claim 20, wherein the edible starch is at least one selected from the group consisting of corn starch, rice starch, potato starch, wheat starch, sweet potato starch, tapioca starch, mung bean starch.

22. The method for preparing meat-containing puffed food of any one of claims 1 to 21, wherein the grain is at least one selected from the group consisting of rice, millet, corn, wheat, oat, barley, and sorghum.

23. The method for preparing meat-containing puffed food of any one of claims 1 to 22, wherein the meat in the puffed pellet and the meat in the dried meat each is at least one independently selected from the group consisting of chicken, pork, beef, lamb, duck, and seafood.

24. The method for preparing meat-containing puffed food of any one of claims 1 to 23, further comprising packaging the prepared meat-containing puffed food.

25. A meat-containing puffed food prepared by the method for preparing meat-containing puffed food of any one of claims 1 to 24.

26. The meat-containing puffed food of claim 25, wherein the meat-containing puffed food is prepared by raw materials comprising: 30 wt.% to 98 wt.% of the puffed pellet, 1 wt.%~30 wt.% of the dried meat, and 1 wt.%~40 wt.% of seasoning slurry.

27. The meat-containing puffed food of claim 25 or 26, wherein the meat-containing puffed food is prepared by raw materials comprising: 60 wt.% of the puffed pellet, 20 wt.% of the dried meat, 15 wt.% of vegetable oil and 5 wt.% of seasoning.

28. The meat-containing puffed food of any one of claims 25 to 27, wherein the puffed pellet is prepared by raw materials comprising: 5 wt.%~60 wt.% of grains, 5 wt.%~60 wt.% of meat, 0 wt.%~20 wt.% of beans,0 wt.%~25 wt.% of protein powder, and 0 wt.%~45 wt.% of edible starch.

29. The meat-containing puffed food of any one of claims 25 to 28, wherein the puffed pellet is prepared by raw materials comprising: 20 wt.% of grains, 60 wt.% of meat, 5 wt.% of protein powder, 5 wt.% of beans, 8.5 wt.% of edible starch, and 1.5 wt.% of food additives.
